# EUROPÄISCHE PATENTSCHRIFT

(11) **EP 3 271 162 B1**
(45) Veröffentlichungstag und Bekanntmachung des Hinweises auf die Patenterteilung: **13.11.2024**
(21) Anmeldenummer: 16712763.8
(22) Anmeldetag: 16.03.2016
(51) Int. Cl.: G02B 19/00, F21Y 115/10, F21V 7/00, F21V 5/00, B29D 11/00, F21V 5/04

(54) **OPTISCHES ELEMENT ZUR BEEINFLUSSUNG DER LICHTABGABE VON LEUCHTMITTELN**
OPTICAL ELEMENT FOR INFLUENCING THE LIGHT EMISSION OF ILLUMINANTS
ÉLÉMENT OPTIQUE DESTINÉ À INFLUER SUR LA QUANTITÉ DE LUMIÈRE ÉMISE PAR DES SOURCES LUMINEUSES

(30) Priorität: 16.03.2015 DE 102015204690
(43) Veröffentlichungstag der Anmeldung: 24.01.2018
(73) Patentinhaber: Zumtobel Lighting GmbH, 6850 Dornbirn (AT)
(72) Erfinder: EBNER, Stephan, 6850 Dornbirn (AT); SCHWÄRZLER, Erich, 6941 Langenegg (AT)
(74) Vertreter: Thun, Clemens
(86) Internationale Anmeldenummer: PCT/EP2016/055625
(87) Internationale Veröffentlichungsnummer: WO 2016/146649

(56) Entgegenhaltungen:
- WO-A1-2007/051323
- WO-A1-2014/125115
- WO-A1-2016/128448
- US-A1- 2007 092 636
- US-A1- 2007 159 837
- US-A1- 2010 110 695
- US-A1- 2011 096 553
- US-A1- 2013 107 540
- US-A1- 2014 071 693
- CHANGHWAN KIM ET AL: "Fabrication of a fused silica based mold for the microlenticular lens array using a femtosecond laser and a CO_2 laser", OPTICAL MATERIALS EXPRESS, vol. 4, no. 11, 1 November 2014 (2014-11-01), pages 2233, XP055748012, ISSN: 2159-3930, DOI: 10.1364/OME.4.002233

## Beschreibung

Die vorliegende Erfindung betrifft ein optisches Element gemäß dem Oberbegriff des Anspruchs 1, welches zur Beeinflussung der Lichtabgabe von Leuchtmitteln, insbesondere zur Beeinflussung der Lichtabgabe einer oder mehrere LEDs vorgesehen ist und aus einem lichtdurchlässigen Material besteht, wobei das optische Element zumindest einen Oberflächenbereich aufweist, der als lichtbrechende Lichteintrittsfläche oder Lichtaustrittsfläche des optischen Elements dient. Darüber hinaus betrifft die vorliegende Erfindung eine Anordnung zur Lichtabgabe sowie ein Werkzeug und ein Verfahren zum Herstellen eines derartigen optischen Elements. Leuchtmittel im Allgemeinen, insbesondere jedoch LEDs benötigen zum Anpassen der Lichtabgabe an eine gewünschte Lichtabstrahlcharakteristik optische Systeme, mit deren Hilfe das von den Leuchtmitteln abgegebene Licht in eine gewünschte Richtung gelenkt wird. Derartige optische Systeme sind, wie bereits erwähnt, insbesondere bei der Nutzung von LEDs als Lichtquellen erforderlich, da LEDs Licht in einen sehr breiten Winkelbereich abstrahlen, üblicherweise jedoch lediglich eine Lichtabgabe innerhalb eines definierten Bereichs gewünscht ist. Dabei haben sich insbesondere Linsensysteme als vorteilhaft herausgestellt, welche das Licht über physikalische Brechungseigenschaften in die gewünschte Richtung lenken.

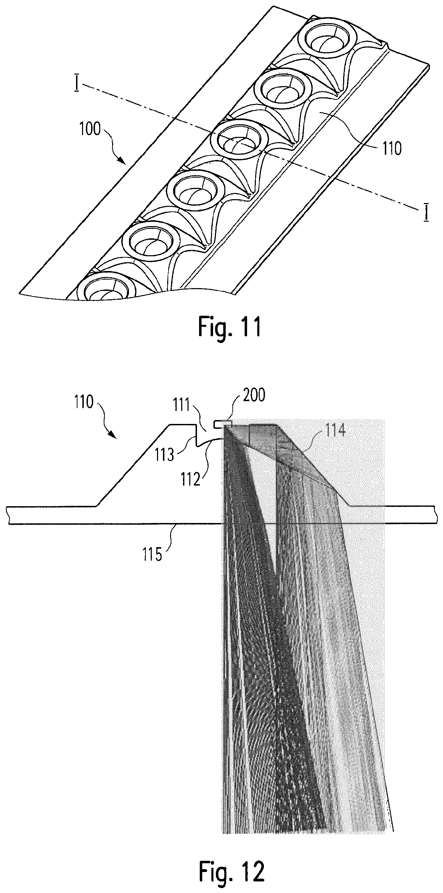

Ein aus dem Stand der Technik bekanntes optisches Element, welches dazu vorgesehen ist, das Licht einer Mehrzahl von in Längsrichtung hintereinander angeordneten LEDs zu beeinflussen, ist in den Figuren 11 und 12 dargestellt, wobei Figur 12 etwa einer Schnittdarstellung entlang der Linie I-I von Figur 11 entspricht. Weitere optische Elemente sind aus "Fabrication of a fused silica based mold for the microlenticular lens array using a femtosecond laser and a CO2 laser" (Optical Materials Express, Vol. 4, Nr. 11, 03.10.2014) oder US2007092636A1 bekannt.

Das in Figur 11 gezeigte, allgemein mit dem Bezugszeichen 100 versehene optische Element besteht dabei aus einer Mehrzahl von hintereinander angeordneten Linsenkörpern 110, denen jeweils eine LED oder ein LED-Cluster, bestehend bspw. aus drei LEDs in den Farben rot, grün und blau zugeordnet ist. Jeder Linsenkörper 110 ist dabei gleichartig ausgebildet und weist entsprechend der Schnittdarstellung von Figur 12 in etwa eine Kegelstumpfform auf, wobei der LED 200 eine Ausnehmung 111 zugewandt ist, deren Bodenfläche 112 und Umfangsfläche 113 den Lichteintrittsbereich für das Licht der LED 200 bilden. An der gegenüberliegenden Seite dieser Ausnehmung 111 befindet sich die Lichtabstrahlfläche 115, welche über die umlaufende Mantelfläche 114 mit dem Lichteintrittsbereich verbunden ist. Auch komplexere Linsensysteme mit z.B. einem Strahlteiler oder mehrstufig ausgebildete optische Systeme sind denkbar.

Die Wirkungsweise dieser an sich bereits bekannten Optik kann anhand des Strahlenverlaufs, der in Figur 12 schematisch angedeutet ist, nachvollzogen werden.

Dabei ist erkennbar, dass ein Teil des von der LED 200 abgegebenen Lichts über die gewölbte Bodenfläche 112 der Ausnehmung 111 in den Linsenkörper 110 eintritt. Dieses Licht wird beim Übergang in den Linsenkörper 110 mehr oder weniger stark gebrochen, trifft dann im nächsten Schritt auf die Lichtaustrittsfläche 115 und wird über diese zur Unterseite hin abgegeben. Licht hingegen, welches eher seitlich von der LED 200 abgegeben wird, tritt über die Umfangsfläche 113 der Ausnehmung 111 in den Linsenkörper 110 ein, derart, dass es von der Innenseite her auf die Mantelfläche 114 des Linsenkörpers trifft. Die Form des Linsenkörpers 110 ist derart ausgeführt, dass diese Lichtstrahlen an der Mantelfläche 114 total-reflektiert werden. Sie werden hierbei wiederum zur Unterseite hin derart abgelenkt, dass sie den Linsenkörper 110 über dessen Bodenfläche 115 verlassen können.

Derartige Optiken bzw. Linsen sind wie bereits erwähnt aus dem Stand der Technik bekannt und haben sich vielfach bewährt, da das Licht, welches von der LED 200 in unterschiedlichste Richtungen abgegeben wird, trotz allem nahezu vollständig genutzt und effizient über die Lichtaustrittsfläche, die durch die Bodenfläche 115 gebildet wird, abgegeben werden kann. Dementsprechend weisen derartige Optiken also eine hohe Effizienz auf.

Üblicherweise werden derartige Linsensysteme aus einem glasklaren Material, insbesondere aus Kunststoff gebildet. Dabei hat sich als problematisch herausgestellt, dass mit Hilfe derartiger Linsen das LED-Licht zwar effizient gebündelt und zur Unterseite hin abgegeben werden kann, allerdings das über die Bodenfläche 112 in den Linsenkörper 110 eintretende Licht einerseits und das an der Mantelfläche 114 total-reflektierte Licht andererseits nicht vollständig überlagert werden. Wie Figur 12 erkennen lässt, wird dabei auf einer zu beleuchtenden Fläche der zentrale Bereich eher durch das Licht beleuchtet, welches von der LED 200 nach unten abgegeben wird und damit über die Bodenfläche 112 der Ausnehmung 111 in den Linsenkörper 110 eintritt, während hingegen Randbereiche des Beleuchtungsfelds durch das total-reflektierte, also von der LED 200 eher seitlich abgegebene Licht beleuchtet werden. Da LEDs hinsichtlich der Wellenlänge des abgegebenen Lichts eine gewisse Winkelabhängigkeit aufweisen, also bspw. Licht einer längeren Wellenlänge eher seitlich abgegeben wird, hat dies zur Folge, dass im Beleuchtungsfeld Inhomogenitäten, insbesondere helle Stellen bzw. Helligkeitsübergänge und/oder farbliche Unregelmäßigkeiten entstehen können. Diese werden als unschön bzw. störend wahrgenommen und sollten vermieden werden.

Um das Erscheinungsbild hinsichtlich einer gleichmäßigen Ausleuchtung zu verbessern, ist dementsprechend bei den in den Figuren 11 und 12 dargestellten Linsensystemen bereits bekannt, die unschönen und störenden Abbildungen durch diffus-streuende Bereiche zu kaschieren. Hierbei wird die Lichtaustrittsfläche 115 der Optik wird mit einer leicht streuenden Struktur versehen, um die oben beschriebenen Unregelmäßigkeiten auszugleichen.

Das Einbringen dieser Streustrukturen erfolgt dabei durch ein entsprechendes Aufrauen der Oberfläche, wobei genau genommen nicht das optische Element selbst bearbeitet wird sondern stattdessen das üblicherweise zum Herstellen des optischen Elements vorgesehene Spritzgießwerkzeug. In diesem Fall wird diejenige Fläche des Werkzeugs, welche später für die Ausgestaltung der Lichtaustrittsfläche verantwortlich ist, mit einer entsprechenden Oberflächenrauigkeit versehen, die dann auf die Lichtaustrittsfläche der Linse übertragen wird.

Durch derartige Maßnahmen kann zwar das Erscheinungsbild im Vergleich zu einer perfekt planen Lichtaustrittsfläche des Linsenkörpers verbessert werden, allerdings führen diese Streustrukturen aufgrund der hiermit zwangsläufig verbunden Unregelmäßigkeiten und Unstetigkeiten in der Oberfläche zu Störungen, die dazu führen, dass Licht zumindest teilweise undefiniert in ungewünschte Richtungen abgegeben wird. Dies führt letztendlich zu teilweisen Verlusten in der Lichtabgabe bis hin zu einem störenden Blenden durch die gesamte LED-Leuchte.

Ein weiterer Nachteil dieser im Stand der Technik genutzten Streustrukturen besteht darin, dass die Möglichkeiten, die Lichtabgabe des optischen Elements speziellen Bedürfnissen anzupassen, stark limitiert sind. Soll beispielweise die zu beleuchtende Fläche gezielt in einigen Bereichen - z.B. in einem zentralen Bereich - stärker erhellt werden, so kann dies mit Hilfe der bislang bekannten Lösungen nur schwer realisiert werden.

Zwar ist aus dem Stand der Technik als alternative Maßnahme bekannt, die Lichtaustrittsfläche einer Linse bzw. eines optischen Elements mit einer lichtlenkenden, nicht-ebenen Geometrie zu versehen, durch welche die Lichtabstrahleigenschaften zusätzlich beeinflusst werden. Beispielsweise ist es im Stand der Technik üblich, Lichtaustrittsflächen von optischen Elementen mit Prismenstrukturen zu versehen, welche ebenfalls eine Vergleichmäßigung der Lichtabgabe sowie ggf. ein Bündeln des Lichts auf einen bestimmten Winkelbereich bewirken sollen. Auch diese Geometrien sind allerdings hinsichtlich ihrer Wirkungsweise beschränkt oder weisen wiederum Kanten und dergleichen auf, an denen unkontrollierte Streuungen des Lichts auftreten.

Der vorliegenden Erfindung liegt deshalb die Aufgabenstellung zugrunde, bei optischen Elementen zur Beeinflussung der Lichtabgabe von Leuchtmitteln die oben beschriebenen Nachteile zu vermeiden. Ferner soll mit Hilfe der erfindungsgemäßen Lösung die Möglichkeit eröffnet werden, die durch das optische Element vorgegebene Lichtabgabe weiterhin positiv zu beeinflussen bzw. individuellen Wünschen anzupassen.

Die Aufgabe wird durch ein optisches Element zur Beeinflussung der Lichtabgabe von Leuchtmitteln, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht zunächst einmal auf dem Gedanken, die Lichtaustrittsfläche des optischen Elements bzw. allgemein eine lichtbrechende Fläche des optischen Elements wiederum mit einer Streustruktur zu versehen, diese allerdings nicht wie bislang üblich durch mechanisches Bearbeiten des optischen Elements bzw. eines zur Herstellung des optischen Elements genutzten Werkzeugs mit entsprechender Formgebung, z.B. eines Spritzgießwerkzeugs zu erstellen, sondern stattdessen das optische Element oder das Werkzeug thermisch zu bearbeiten, insbesondere umzuformen. Dabei ist ferner vorgesehen, das die im Rahmen der thermischen Bearbeitung hergestellte Struktur in mindestens zwei Teil-Bereiche unterteilt ist, deren jeweilige Strukturen eine unterschiedliche Geometrie aufweisen, wobei diese Strukturen an gemeinsamen Grenzen der Teil-Bereiche stetig ineinander übergehen.

Gemäß der vorliegenden Erfindung wird also ein optisches Element zur Beeinflussung der Lichtabgabe von Leuchtmitteln, insbesondere zur Beeinflussung der Lichtabgabe einer oder mehrerer LEDs vorgeschlagen, wobei das optische Element aus einem lichtdurchlässigen Material besteht und zumindest einen Oberflächenbereich aufweist, der als lichtbrechende Lichtaustrittsfläche des optischen Elements dient, wobei der Oberflächenbereich eine Struktur aufweist, welche durch Umschmelzen des optischen Elements oder eines zur Herstellung des optischen Elements verwendeten Werkzeugs mit entsprechender Formgebung, z.B. eines Spritzgießwerkzeugs mit Hilfe eines Lasers erstellt wurde, wobei die Struktur in mindestens zwei Teil-Bereiche unterteilt ist, deren jeweilige Strukturen eine unterschiedliche Geometrie aufweisen, wobei diese Strukturen an gemeinsamen Grenzen der Teil-Bereiche stetig ineinander übergehen. Weiterhin weist die Struktur zumindest zweier Teil-Bereiche jeweils zumindest entlang einer ersten Richtung eine stetige, insbesondere eine stetige und differenzierbare wellenartige Form auf, wobei die wellenartige Struktur eine Wellenlänge im Bereich von etwa 50-500µm aufweist; und/oder die wellenartige Struktur Erhebungen mit einer Höhe im Bereich von etwa 5-100µm aufweist. Die Teil-Bereiche unterscheiden sich weiterhin hinsichtlich ihrer Wellenlänge und hinsichtlich der Höhe der Erhebungen.

Ferner wird erfindungsgemäß gemäss Anspruch 7 ein Spritzgießwerkzeug zum Erstellen eines optischen Elements zur Beeinflussung der Lichtabgabe von Leuchtmitteln vorgeschlagen, wobei das Werkzeug einen Oberflächenbereich aufweist, der zum Bilden einer lichtbrechenden Lichtaustrittsfläche des optischen Elements vorgesehen ist, wobei der Oberflächenbereich des Werkzeugs mit einer Struktur versehen ist, welche durch Umschmelzen des Werkzeugs mit Hilfe eines Lasers erstellt wurde, wobei die Struktur in mindestens zwei Teil-Bereiche unterteilt ist, deren jeweilige Strukturen eine unterschiedliche Geometrie aufweisen, wobei diese Strukturen an gemeinsamen Grenzen der Teil-Bereiche stetig ineinander übergehen. Weiterhin weist die Struktur zumindest zweier Teil-Bereiche jeweils zumindest entlang einer ersten Richtung eine stetige, insbesondere eine stetige und differenzierbare wellenartige Form auf, wobei die wellenartige Struktur eine Wellenlänge im Bereich von etwa 50-500µm aufweist; und/oder die wellenartige Struktur Erhebungen mit einer Höhe im Bereich von etwa 5-100µm aufweist. Die Teil-Bereiche unterscheiden sich weiterhin hinsichtlich ihrer Wellenlänge und hinsichtlich der Höhe der Erhebungen.

Ferner wird ein Verfahren gemäss Anspruch 8 zum Erstellen eines optischen Elements zur Beeinflussung der Lichtabgabe von Leuchtmitteln vorgeschlagen, wobei das optische Element aus einem lichtdurchlässigen Material besteht und zumindest einen Oberflächenbereich aufweist, der als lichtbrechende Lichtaustrittsfläche des optischen Elements dient, wobei der Oberflächenbereich durch Umschmelzen mit Hilfe eines Lasers mit einer Struktur versehen wird und wobei diese Struktur in mindestens zwei Teil-Bereiche unterteilt ist, deren jeweilige Strukturen eine unterschiedliche Geometrie aufweisen, wobei diese Strukturen an gemeinsamen Grenzen der Teil-Bereiche stetig ineinander übergehen. Weiterhin weist die Struktur zumindest zweier Teil-Bereiche jeweils zumindest entlang einer ersten Richtung eine stetige, insbesondere eine stetige und differenzierbare wellenartige Form auf, wobei die wellenartige Struktur eine Wellenlänge im Bereich von etwa 50-500µm aufweist; und/oder die wellenartige Struktur Erhebungen mit einer Höhe im Bereich von etwa 5-100µm aufweist. Die Teil-Bereiche unterscheiden sich weiterhin hinsichtlich ihrer Wellenlänge und hinsichtlich der Höhe der Erhebungen.

Schließlich wird auch ein Verfahren gemäss Anspruch 9 zum Erstellen eines optischen Elements zur Beeinflussung der Lichtabgabe von Leuchtmitteln vorgeschlagen, wobei das optische Element aus einem lichtdurchlässigen Material besteht und zumindest einen Oberflächenbereich aufweist, der als lichtbrechende Lichtaustrittsfläche des optischen Elements dient, wobei das optische Element durch Spritzgießen erstellt wird und die dem Oberflächenbereich entsprechende Oberfläche des Spritzgießwerkzeugs mit einer Struktur versehen ist, welche durch Umschmelzen mit Hilfe eines Lasers erstellt wurde, und wobei die Struktur in mindestens zwei Teil-Bereiche unterteilt ist, deren jeweilige Strukturen eine unterschiedliche Geometrie aufweisen, wobei diese Strukturen an gemeinsamen Grenzen der Teil-Bereiche stetig ineinander übergehen. Weiterhin weist die Struktur zumindest zweier Teil-Bereiche jeweils zumindest entlang einer ersten Richtung eine stetige, insbesondere eine stetige und differenzierbare wellenartige Form auf, wobei die wellenartige Struktur eine Wellenlänge im Bereich von etwa 50-500µm aufweist; und/oder die wellenartige Struktur Erhebungen mit einer Höhe im Bereich von etwa 5-100µm aufweist. Die Teil-Bereiche unterscheiden sich weiterhin hinsichtlich ihrer Wellenlänge und hinsichtlich der Höhe der Erhebungen.

Die Weiterbildung der aus dem Stand der Technik bekannten Lösungen besteht also einerseits darin, die Oberfläche des optischen Elements in einer sehr speziellen Art und Weise mit einer Struktur zu versehen, die - wie nachfolgend noch näher beschrieben - zu deutlichen Vorteilen hinsichtlich der Effizienz und Möglichkeiten, die Lichtabgabe zu kontrollieren, führt, sowie andererseits die Struktur derart zu gestalten, dass sie über die Oberfläche hinweg gesehen nicht gleichmäßig ist. Hierdurch kann in spezieller und individueller Weise Einfluss sowohl auf das Erscheinungsbild als auch auf die Lichtabgabe durch das optische Element vorgenommen werden, so dass letztendlich die Einsatzmöglichkeiten deutlich verbessert werden.

Das thermische Bearbeiten des optischen Elements, insbesondere jedoch des zur Herstellung verwendeten Werkzeugs mit erfolgt dabei vorzugsweise mit Hilfe eines Lasers. Entsprechende Bearbeitungsverfahren von Oberflächen sind bereits aus dem Stand der Technik bekannt, wurden bislang jedoch nicht zur Bearbeitung optischer Elemente, insbesondere nicht zur Bearbeitung der lichtbrechenden Oberflächen optischer Elemente eingesetzt. Es hat sich nunmehr jedoch gezeigt, dass mit Hilfe dieser Verfahren äußerst effizient die lichtbrechende Fläche eines optischen Elements in gewünschter Weise gestaltet werden kann.

Vorzugsweise weist die Struktur zumindest eines Teilbereichs entlang einer ersten Richtung eine stetige wellenartige bzw. periodische Form auf. Auch ein Überlagern zweier stetiger wellenartiger bzw. periodischer Strukturen, welche insbesondere im Wesentlichen senkrecht zueinander ausgerichtet sind, wäre denkbar. Das thermische Bearbeiten des Spritzgießwerkzeugs erlaubt dabei, Strukturen zu erstellen, deren Wellenlänge im Bereich von wenigen bis einigen Mikrometern, typisch etwa 50-500µm liegt. Auch kleinere oder größere Wellenlängen wären realisierbar, wobei in diesem Fall allerdings dann die gewünschte streuende Funktion der Struktur wiederum zu- bzw. abnimmt. Die Erhebungen der wellenartigen Strukturen können dabei im Bereich von wenigen Mikrometern, typisch etwa 5-100µm liegen. Strukturen in derartigen Größenordnungen wären durch mechanische Bearbeitung von Oberflächen in einer entsprechenden Genauigkeit nicht möglich. Stattdessen würden hierbei immer Unregelmäßigkeiten bzw. Sprünge entstehen, die jedoch mit der erfindungsgemäßen Lösung vermieden werden.

Zur Klarstellung ist hier darauf hinzuweisen, dass die mit Hilfe der erfindungsgemäßen Lösung realisierte Struktur zwar als Streustruktur bezeichnet wird, da sie nach wie vor u.a. die oben erwähnte Aufgabe der beim Stand der Technik genutzten Streustruktur erfüllen soll, nämlich eine Vergleichmäßigung der Lichtabgabe zu erzielen, allerdings im erfindungsgemäßen Fall keine klassische diffuse Streuung, als kein statistisches Ablenken der Lichtstrahlen erfolgt. Stattdessen zeichnet sich die erfindungsgemäße Lösung dadurch aus, dass aufgrund der damit erzielbaren stetigen und differenzierbaren Oberflächengestaltung eine sehr gut kontrollierbare Beeinflussung der Lichtstrahlen durch Brechung erfolgen kann.

Diese Vorteile hinsichtlich der gut kontrollierbaren Beeinflussung der Lichtstrahlen durch die neuartige Oberflächenstruktur werden nunmehr erfindungsgemäß dazu genutzt, gezielt das über die Lichtaustrittsfläche des optischen Elements abgegebene Licht zusätzlich zu beeinflussen. Zwar wird nach wie vor durch die makroskopische Gestaltung des optischen Elements primär dessen Lichtabstrahleigenschaft definiert, durch eine individuelle Gestaltung der Oberflächenstruktur im Rahmen einzelner Zonen kann nunmehr allerdings gezielt innerhalb des von dem optischen Elements ausgeleuchteten Bereichs weiterer Einfluss auf die Ausleuchtung genommen werden. Es besteht also in diesem Fall dann ohne Weiteres die Möglichkeit, gezielt einzelne Bereiche des insgesamt ausgeleuchteten Bereichs hervorzuheben, wobei dieser Effekt bis zum Darstellen grafischer Informationen weitergeführt werden kann. Trotz allem wird über den gesamten Bereich hinweg eine hochqualitative Beleuchtung erzielt, dahingehend, dass keine Farbinhomogenitäten oder dergleichen auftreten.

Die Gestaltung der verschiedenen Zonen derart, dass sie stetig ineinander übergehen, hat darüber hinaus auch den bereits oben erwähnten Effekt zur Folge, dass das Auftreten ungewünschter Streustrahlen nahezu vollständig vermieden wird.

Letztendlich kann also mit Hilfe der erfindungsgemäßen Lösung die Lichtabgabe eines optischen Elements nochmals gezielt beeinflusst, insbesondere im Hinblick auf die Effizienz und Qualität der Ausleuchtung verbessert werden.

Nachfolgend soll die Erfindung anhand der beiliegenden Zeichnung näher erläutert werden. Es zeigen:
- Figur 1: eine schematische Darstellung zur Verdeutlichung der Vorgehensweise zum Strukturieren der Oberfläche eines optischen Elements;
- Figur 2: eine erste Möglichkeit der Gestaltung der Struktur derart, dass unterschiedliche Bereiche mit unterschiedlichen Geometrien gebildet werden;
- Figur 3: eine schematische Darstellung zur Verdeutlichung der Wirkungsweise der in Figur 2 gezeigten Strukturierung;
- Figur 4: eine weitere Möglichkeit zur individuellen Gestaltung des Oberflächenbereichs eines optischen Elements;
- Figuren 5a und 5b: sowie 6a und 6b Möglichkeiten zum Kombinieren unterschiedlich gestalteter Teil-Bereiche zu einer insgesamt stetig ineinander übergehenden Oberflächenstruktur;
- Figuren 7 bis 10: weitere Möglichkeiten zur Nutzung des erfindungsgemäßen Konzepts zur Strukturierung der Oberfläche eines optischen Elements und

Figuren 11 und 12 ein aus dem Stand der Technik bekanntes optisches Element.

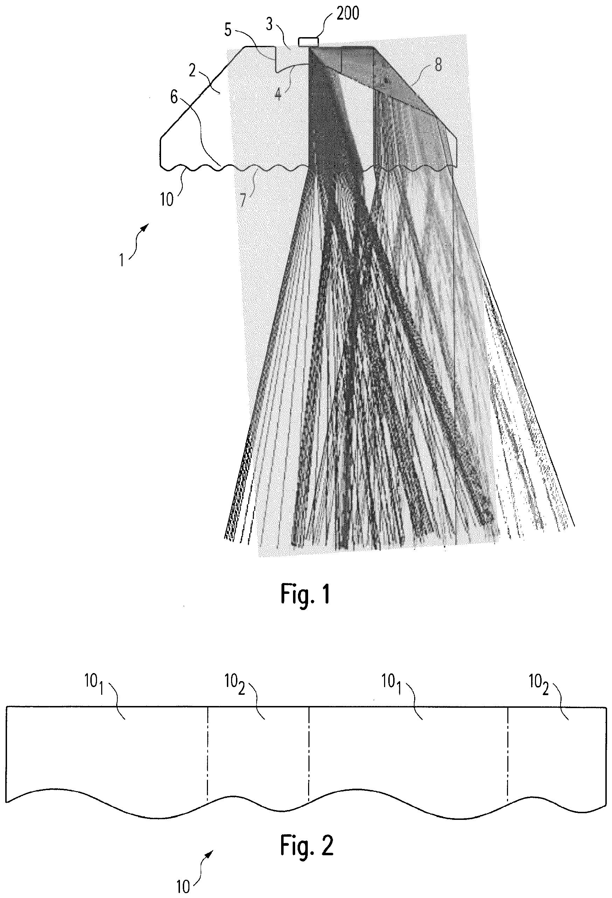

Anhand von Figur 1 soll zunächst der erste wesentliche Bestandteil der erfindungsgemäßen Lösung, nämlich die Oberfläche eines optischen Elements - hier einer Linse - durch thermische Bearbeitung zu gestalten, erläutert werden. Anhand der weiteren Figuren wird dann näher beschrieben, in welcher Weise diese Vorgehensweise zur Oberflächengestaltung weiterentwickelt und mit dem Gedanken kombiniert wird, unterschiedliche Teil-Bereiche mit unterschiedlichen Geometrien zur individuellen Beeinflussung der Lichtabgabe zu nutzen.

Der Aufbau der in Figur 1 dargestellten Linse entspricht dabei im Wesentlichen dem Aufbau der Linse von Fig. 12. Auch die Linse 1 in Figur 1 weist also einen etwa kegelstumpfartig ausgestalteten Linsenkörper 2 - vorzugsweise bestehend aus glasklarem Material, insbesondere Kunststoff oder aber auch Glas oder Silikon - auf, der an seiner der LED 200 zugewandten Seite eine Ausnehmung 3 aufweist, deren Bodenfläche 4 und Umfangsfläche 5 die Lichteintrittsflächen für das LED-Licht bilden. Wiederum wird derjenige Anteil des Lichts, der über die vorzugsweise leicht linsenartig, also gekrümmt ausgeführte Bodenfläche 4 der Ausnehmung 3 in den Linsenkörper 2 eintritt, derart gebrochen, dass er auf die Unterseite 6 des Linsenkörpers trifft und über die durch die Unterseite gebildete Lichtaustrittsfläche 7 der Linse 1 austritt. Ein anderer Teil des Lichts hingegen, der über die Umfangsfläche 5 der Ausnehmung 3 in den Linsenkörper 2 eintritt, wird an der Mantelfläche 8 des Linsenkörpers 2 total reflektiert und verlässt dann wiederum die Linse 1 über die Austrittsfläche 7.

Im Gegensatz zu der aus dem Stand der Technik bekannten Lösung ist nunmehr allerdings die Lichtaustrittsfläche 7 mit einer wellenartig ausgebildeten Streustruktur 10 versehen, welche in der nachfolgend beschriebenen speziellen Art und Weise erstellt wurde. Streustrukturen waren, wie bereits erwähnt, auch bereits im Stand der Technik bekannt, wurden allerdings dadurch realisiert, dass die entsprechende Oberfläche des zur Herstellung der Linse üblicherweise genutzten Spritzgießwerkzeugs in der Regel mechanisch bearbeitet wurde. Ein mechanisches Bearbeiten hat zwangsläufig zur Folge, dass einzelne Partikel in unregelmäßiger Weise aus der Oberfläche des Spritzgießwerkzeugs entfernt werden, so dass eine unregelmäßige und insbesondere unstetige Struktur mit Sprüngen und Kanten entsteht, durch welche, wie eingangs erwähnt, ungewollte und die Effizienz der Linse reduzierende Streuungen entstehen können.

Erfindungsgemäß ist hingegen vorgesehen, dass die Streustruktur 10 in einer speziellen Art und Weise definiert erstellt wird, die sicherstellt, dass die Streustruktur 10 stetig, genau genommen sogar stetig und differenzierbar ausgebildet ist. D.h., die erfindungsgemäße Struktur 10 weist weder Sprünge noch Knicke oder Kanten auf, durch welche ungewollte Lichtstreuungen entstehen könnten. Stattdessen kann - wie nachfolgend näher erläutert - durch die Struktur 10 das von der Linse 1 insgesamt abgegebene Licht definiert und äußerst effizient in gewünschter Weise beeinflusst werden, um eine gewünschte Lichtabgabe zu erzielen.

Die Streustruktur 10 der Linse 1 wird also nicht durch ein mechanisches Bearbeiten der Linse oder des zur Herstellung genutzten Spritzgießwerkzeugs erzielt, sondern dadurch erhalten, dass z.B. die Lichtaustrittsfläche 7 der Linse 1, vorzugsweise jedoch das zum Herstellen der Linse genutzte Spritzgießwerkzeug thermisch bearbeitet wird. Da eine thermische Bearbeitung des Spritzgießwerkzeugs - oder auch eines anderen zur Herstellung des optischen Elements genutzten Werkzeugs mit entsprechender Formgebung - zur Folge hat, dass die damit hergestellten Linsen nicht mehr einzeln nachträglich bearbeitet werden müssen, um die Streustruktur 10 zu erzielen, ist selbstverständlich ein Einbringen der komplementären Streustruktur in die Oberfläche des Werkzeugs zu bevorzugen. Grundsätzlich könnte das beschriebene Prinzip allerdings auch unmittelbar auf das optische Element angewendet werden.

Im Rahmen der thermischen Behandlung findet also kein abhebendes mechanisches Bearbeiten oder anderweitiges Strukturieren bspw. durch fotochemisches Ätzen statt, sondern es wird lediglich ein Umformen der Oberfläche vorgenommen. Dieses Strukturieren erfolgt dabei vorzugsweise mit Hilfe von Laserstrahlung, wobei hierbei kein Material der Werkzeugoberfläche abgetragen wird, sondern stattdessen im schmelzflüssigen Zustand durch eine Modulation des Schmelzbadvolumens das Material umverteilt wird. Dabei ist es möglich, durch entsprechendes Modulieren der Laserleistung das Schmelzbadvolumen gezielt zu beeinflussen und damit auch die Oberflächenstruktur in gewünschter Weise zu formen. Der Vorteil dieser Vorgehensweise besteht dabei darin, dass das Material des Spritzgießwerkzeugs - oder ggf. auch des optischen Elements - nach der thermischen Bearbeitung direkt aus der Schmelze heraus erstarrt, so dass abgesehen von der gezielt eingebrachten Strukturierung eine gleichmäßige, im Prinzip vernachlässigbare Rauheit erzielt wird. Die Oberfläche des Werkzeugs wird also einerseits in gewünschter Weise strukturiert, andererseits im Prinzip gleichzeitig poliert, so dass tatsächlich im Rahmen der gewünschten Größenordnung eine nahezu ideal stetige und differenzierbare Oberflächenstruktur geschaffen wird. Dabei könnte im Prinzip auch alternativ zur Nutzung des Laserstrahls eine anderweitige thermische Bearbeitung der Oberfläche vorgenommen werden, wesentlich ist, dass eben keine mechanische Bearbeitung erfolgt, sondern durch gezieltes Einbringen von Wärme die Oberfläche umgeformt wird.

Mit Hilfe dieses Verfahrens könnte also die Lichtaustrittsfläche 7 der Linse 1 beispielsweise wie dargestellt mit einer Wellenform versehen werden. Die Wellenstruktur 10, die im dargestellten Ausführungsbeispiel in etwa einer Sinusform folgt, grundsätzlich jedoch jegliche Form annehmen kann, die durch eine mathematische Gleichung beschreibbar ist, kann dabei bspw. entlang einer Richtung wellenförmig ausgebildet sein, in einer Richtung senkrecht hierzu jedoch translationsinvariant sein, so dass im Prinzip die Lichtaustrittsfläche 7 mit in Längsrichtung verlaufenden alternierenden Erhebungen und Vertiefungen ausgebildet ist. Denkbar wäre allerdings auch in gleicher Weise, zwei Wellenstrukturen, die senkrecht zueinander ausgerichtet sind, zu überlagern, so dass sich letztendlich eine eher matrixartig ausgebildete Struktur von Erhebungen und Senken ergibt.

Eine denkbare Größenordnung der mit Hilfe der erfindungsgemäßen Vorgehensweise erzielbaren Struktur liegt dabei bspw. bei einer Wellenlänge λ, also einem Abstand zwischen zwei aufeinander folgenden Erhebungen, im Bereich von wenigen bis einigen Mikrometern, etwa 50-500µm. Die Höhe h der Erhebungen kann dabei im Bereich von wenigen Mikrometern, etwa 5-100µm liegen, wobei grundsätzlich auch kleinere oder größere Werte denkbar wären, diese jedoch dann zum Erzielen des nachfolgend beschriebenen Einflusses auf die Lichtabgabe weniger effizient sind.

Die Wirkungsweise einer derartigen Struktur besteht nunmehr darin, dass aufgrund des Fehlens einer Rauheit der Oberfläche kein unkontrolliertes Streuen der das optische Element verlassenden Lichtstrahlen mehr stattfindet, sondern die Strukturierung letztendlich dazu führt, dass - im Falle der dargestellten periodischen Struktur - eine Vielzahl von sehr kleinen aber sehr präzise ausgebildeten linsenartigen Abschnitten erzielt wird, durch welche eine deutlich bessere Kontrolle der Beeinflussung des Lichts durch Brechung ermöglicht wird. Im Vergleich zu klassischen Optiken wird der Verlust an unkontrolliertem Licht also deutlich reduziert und die Effizienz hinsichtlich der Lichtabgabe nochmals deutlich gesteigert.

Ausgehend von der anhand von Figur 1 beschriebenen Grundidee ist nunmehr vorgesehen, wiederum durch entsprechendes thermisches Bearbeiten des optischen Elements bzw. des zur Herstellung des optischen Elements genutzten Werkzeugs dessen Oberfläche mit einer Struktur zu versehen, wobei allerdings diese Struktur mehrere, zumindest jedoch zwei Teil-Bereiche aufweist, deren jeweilige Strukturen eine unterschiedliche Geometrie aufweisen, an ihren Grenzen allerdings stetig ineinander übergehen.

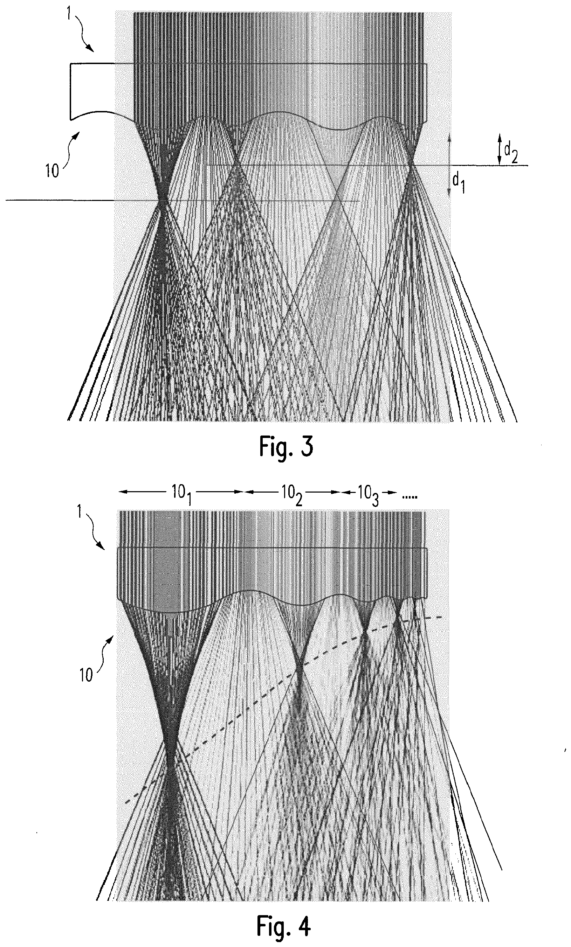

Ein erstes einfaches Ausführungsbeispiel dieses erfindungsgemäßen Gedankens ist in den Figuren 2 und 3 gezeigt. Die hier gezeigte Wellenstruktur 10, die z.B. an der Lichtaustrittsfläche einer Linse, wie sie in Figur 1 gezeigt ist, oder eines beliebigen anderen optischen Elements ausgebildet sein könnte, weist dabei alternierend aufeinanderfolgende Zonen bzw. Teilabschnitte 10₁ und 10₂ auf, wobei die Strukturen beider Zonen 10₁ und 10₂ erfindungsgemäß jeweils wellenartig ausgebildet sind, allerdings sich hinsichtlich ihrer Wellenlänge sowie der Höhe der Erhebungen unterscheiden. Wie der sich hierbei ergebende, in Figur 3 gezeigte Strahlenverlauf erkennen lässt, werden dann durch die unterschiedlichen Zonen 10₁ und 10₂ jeweils linsenartige Bereiche an der Oberfläche des optischen Elements 1 gebildet, die das jeweils austretende Licht auf verschiedene Abstände d₁ bzw. d₂ fokussieren. Für eine beleuchtete Fläche, die sich in einem gewissen Abstand zu dem optischen Element 1 befindet, bedeutet dies, dass diejenigen Bereiche, welche durch das über die Teilabschnitte 10i abgegebene Licht beleuchtet werden, etwas heller erscheinen, da hier das Licht stärker gebündelt auf die Oberfläche auftrifft. Die insgesamt beleuchtete Fläche wird allerdings primär durch die makroskopische Form der Linse bzw. des optischen Elements vorgegeben. Dieses Beispiel verdeutlicht also, dass durch die individuelle Gestaltung einzelner Teil-Bereiche bzw. Zonen der Struktur 10 nochmals über die Gesamtabstrahlcharakteristik der Optik hinausgehend Einfluss auf die Lichtabgabe genommen werden kann.

Eine sinnvolle Weiterbildung dieses Konzepts ist in Figur 4 dargestellt, wobei nunmehr die Struktur 10 derart ausgeführt ist, dass die Zonen 10₁, 10₂, 10₃... nach außen verlaufend jeweils eine wellenartige Struktur mit einer zunehmend kleineren Wellenlänge und Amplitude aufweisen. Hierdurch ergibt sich eine nach außen wandernde Veränderung des Fokus der einzelnen Zonen, dargestellt durch die gestrichelt gezeigte Kurve, welche letztendlich zu einer Reduzierung der Leuchtdichte nach außen hin.

Die Nutzung des in Figur 4 dargestellten Ausführungsbeispiels wäre bspw. bei einem Beleuchtungssystem sinnvoll, bei dem mehrere Leuchten z.B. clusterförmig in einem Raum angeordnet sind. Üblicherweise werden dabei zur Entblendung derartiger Leuchten Optiken verwendet, die unter einem Winkel (z.B. 65°) eine Reduzierung der Leuchtdichte bewirken. Dies bedeutet, dass Personen an einem Büroarbeitsplatz von einer entfernteren Leuchte nicht mehr geblendet werden können bzw. keine störenden Reflexionen von Beleuchtungskörpern an einem Bildschirmgerät erscheinen. Bewegt sich jedoch eine Person im Raum, so wechseln die Bereiche, die eine einzelne Leuchte ausleuchtet, was zur Folge hat, dass plötzlich Licht aus einer anderen Lichtquelle vom Auge wahrgenommen wird. Idealerweise sollte die Lichtabgabe deshalb derart erfolgen, dass die einzelnen Leuchten mit steigender Leuchtdichte in Abhängigkeit zum jeweiligen Wahrnehmungswinkel erscheinen. Dies hat zur Folge, dass der Betrachter bei einer Bewegung durch den Raum keine plötzliche Blendung einer entfernteren Leuchte erfährt, sondern lediglich eine kontinuierliche Zunahme der Helligkeit in einem angrenzenden Ausleuchtungsbereich wahrnimmt. Genau dieser Effekt kann mit Hilfe der in Figur 4 dargestellten Oberflächenstrukturierung erzielt werden, da hier ein sanfterer Übergang in einen Bereich mit reduzierten Leuchtdichten erzielt wird.

Grundsätzlich kann die Gestaltung einzelner Teil-Bereiche sehr unterschiedlich voneinander erfolgen. Wesentlich ist jedoch, dass die Teil-Bereiche an ihren Übergängen stetig ineinander übergehen. Dies deshalb, da durch den stetigen Übergang sichergestellt ist, dass keine ungewünschten Streuungen von Lichtstrahlen stattfinden.

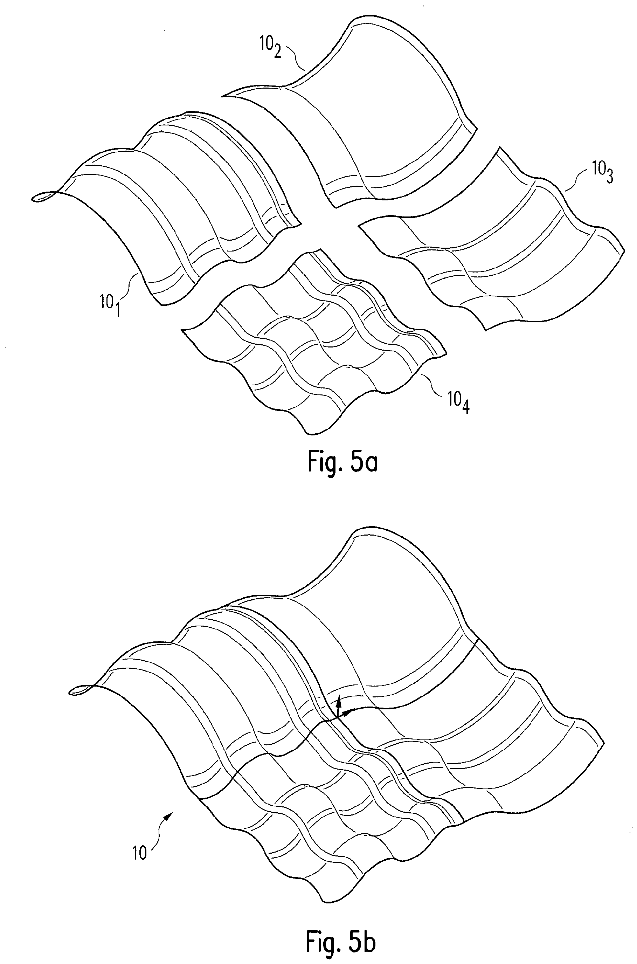

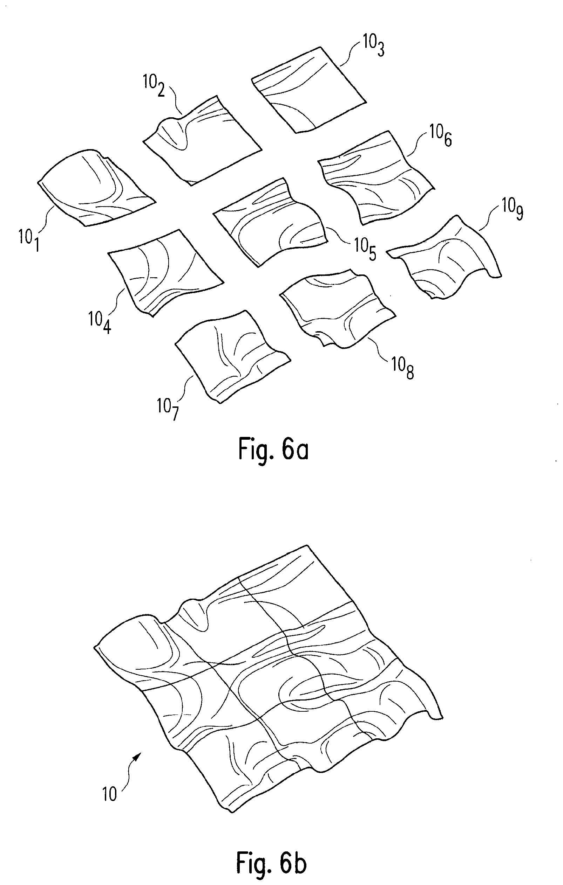

Die Figuren 5a und 5b sowie 6a und 6b zeigen jeweils zwei Beispiele, in welcher Weise ein Zusammenführen entsprechender Teil-Bereiche erfolgen kann, so dass die oben genannte Rahmenbedingung - nämlich ein stetiger Übergang - erfüllt ist. Diese Beispiele verdeutlichen insbesondere auch, dass nicht nur entlang einer Richtung eine unterschiedliche zonale Aufteilung der Oberflächenstruktur denkbar ist, sondern durchaus die Möglichkeit besteht, in sämtlichen Richtungen der Oberfläche hin unterschiedlich gestaltete Zonen 10₁ bis 10₉ zu realisieren und diese dann miteinander zu kombinieren.

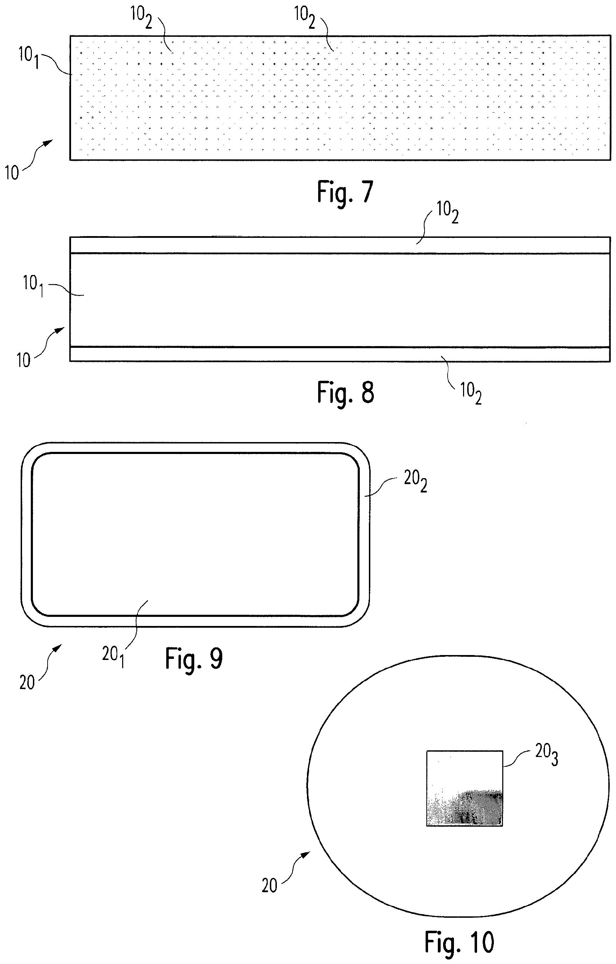

Die Figuren 7 bis 10 zeigen weitere Möglichkeiten zur Nutzung des erfindungsgemäßen Konzepts. Bei der in Figur 7 dargestellten Variante ist dabei eine Vielzahl zweiter Zonen 10₂, die in Figur 7 schematisch punktförmig dargestellt sind, in eine größere rechteckige erste Zone 10₁ integriert. Diese zweiten Zonen 10₂ sind im Vergleich zu der ersten Zone sehr klein ausgestaltet und führen insbesondere auch zu einem speziellen Erscheinungsbild der lichtabgebenden Fläche der Optik.

Eine Variante hiervon ist in Figur 8 dargestellt, bei der zu beiden Seiten einer länglichen ersten Zone 10₁ jeweils zweite Zonen 10₂ ausgebildet sind. Auch diese Maßnahme führt wiederum zu einem speziellen Erscheinungsbild der lichtabgebenden Fläche des optischen Elements. Dabei ist darauf hinzuweisen, dass in beiden Ausführungsbeispielen zunächst einmal die ersten und zweiten Zonen beliebig gestaltet sein können, da durch die Maßnahme im vorliegenden Fall in erster Linie das Erscheinungsbild der lichtabgebenden Fläche, nicht jedoch das der zu beleuchtenden Fläche modifiziert werden soll.

Primär wird allerdings mit Hilfe der erfindungsgemäßen Lösung eine gezielte Beeinflussung der zu beleuchtenden Fläche angestrebt, wobei Figur 9 ein Beispiel zeigt, bei dem - wie bereits weiter oben näher erläutert - durch eine entsprechende Gestaltung des Randbereichs der Struktur die ausgeleuchtete Fläche 20 einen Helligkeitsverlauf aufweist, der an einen Rahmen erinnert. Dabei kann die Strukturierung der verschiedenen Zonen bzw. Teil-Bereiche derart realisiert werden, dass durch eine entsprechende modifizierte Bündelung des Lichts der rahmenartige Bereich 20₂ im Vergleich zu dem zentralen Bereich 20₁ wahlweise heller oder dunkler erscheint.

Die Möglichkeiten zur Beeinflussung der Lichtabgabe mit Hilfe der erfindungsgemäßen Maßnahmen sind dabei derart, dass sogar gezielt grafische Informationen auf einer ausgeleuchteten Fläche dargestellt werden können. Lediglich beispielhaft hierzu ist in Figur 10 ein Beispiel gezeigt, bei dem durch eine entsprechende Gestaltung der Struktur im Beleuchtungsfeld 20 zentral ein Logo 20s, im vorliegenden Fall das der Anmelderin, erscheint. Auch die Darstellung anderer Symbole bzw. von beliebigen Mustern auf der beleuchteten Fläche wäre möglich.

Die dargestellten Beispiele verdeutlichen also, dass mit Hilfe der erfindungsgemäßen Lösung sehr gezielt und individuell Einfluss auf die Lichtabgabe eines optischen Elements genommen werden kann. Insbesondere ergibt sich jedoch eine sehr hohe Beleuchtungsqualität, da mit Hilfe der erfindungsgemäßen Lösung einerseits ungewünschte Streuungen unterdrückt werden können und andererseits die Lichtabgabe sehr gezielt beeinflusst werden kann.

## Patentansprüche

1. Optisches Element (1) zur Beeinflussung der Lichtabgabe von Leuchtmitteln, insbesondere zur Beeinflussung der Lichtabgabe einer oder mehrerer LEDs (200), wobei das optische Element (1) aus einem lichtdurchlässigen Material besteht und zumindest einen Oberflächenbereich (7) aufweist, der als lichtbrechende Lichtaustrittsfläche des optischen Elements (1) dient,
wobei der Oberflächenbereich (7) eine Struktur (10) aufweist, welche durch Umschmelzen des optischen Elements (1) oder eines zur Herstellung des optischen Elements (1) verwendeten Werkzeugs mit entsprechender Formgebung, bevorzugt eines Spritzgießwerkzeugs, mit Hilfe eines Lasers erstellt wurde,
wobei die Struktur (10) in mindestens zwei Teil-Bereiche (10₁, 10₂...) unterteilt ist, deren jeweilige Strukturen eine unterschiedliche Geometrie aufweisen, wobei diese Strukturen an gemeinsamen Grenzen der Teil-Bereiche (10₁, 10₂...) stetig ineinander übergehen,
und wobei die Strukturen der mindestens beiden Teil-Bereiche (10₁, 10₂...) jeweils zumindest entlang einer ersten Richtung eine stetige, insbesondere eine stetige und differenzierbare wellenartige Form aufweist, wobei
• die wellenartige Struktur eine Wellenlänge (λ) im Bereich von etwa 50-500µm aufweist und/oder
• die wellenartige Struktur Erhebungen mit einer Höhe (h) im Bereich von etwa 5-100µm aufweist,
wobei sich die Teil-Bereiche (10₁, 10₂...) hinsichtlich ihrer Wellenlänge (λ) und hinsichtlich der Höhe (h) der Erhebungen unterscheiden.

2. Optisches Element nach Anspruch 1,
**dadurch gekennzeichnet,**
**dass** die Strukturen an gemeinsamen Grenzen der Teil-Bereiche (10₁, 10₂...) stetig und differenzierbar ineinander übergehen.

3. Optisches Element nach einem der vorherigen Ansprüche,
**dadurch gekennzeichnet,**
**dass** die Struktur (10) durch zwei überlagerte stetige, insbesondere stetige und differenzierbare wellenartige Strukturen gebildet ist, welche vorzugsweise im Wesentlichen senkrecht zueinander ausgebildet sind.

4. Optisches Element nach einem der vorherigen Ansprüche,
**dadurch gekennzeichnet,**
**dass** dieses aus einem glasklaren Material, vorzugsweise aus Kunststoff, Glas oder Silikon gebildet ist.

5. Optisches Element nach einem der vorherigen Ansprüche,
**dadurch gekennzeichnet,**
**dass** es sich um eine Linse handelt.

6. Anordnung zur Lichtabgabe mit Leuchtmitteln (200) sowie einem optischen Element (1) zur Beeinflussung der Lichtabgabe,
wobei das optische Element (1) gemäß einem der vorherigen Ansprüche ausgebildet ist.

7. Spritzgießwerkzeug zum Erstellen eines optischen Elements (1) zur Beeinflussung der Lichtabgabe von Leuchtmitteln,
wobei das Werkzeug einen Oberflächenbereich aufweist, der zum Bilden einer lichtbrechenden Lichtaustrittsfläche des optischen Elements (1) vorgesehen ist, wobei der Oberflächenbereich des Werkzeugs mit einer Struktur (10) versehen ist, welche durch Umschmelzen des Werkzeugs mit Hilfe eines Lasers erstellt wurde, wobei die Struktur (10) in mindestens zwei Teil-Bereiche (10₁, 10₂...) unterteilt ist, deren jeweilige Strukturen eine unterschiedliche Geometrie aufweisen, wobei diese Strukturen an gemeinsamen Grenzen der Teil-Bereiche (10₁, 10₂...) stetig ineinander übergehen,
und wobei die Struktur (10) der beiden Teil-Bereiche (10₁, 10₂...) jeweils zumindest entlang einer ersten Richtung eine stetige, insbesondere eine stetige und differenzierbare wellenartige Form aufweist, wobei
• die wellenartige Struktur eine Wellenlänge (λ) im Bereich von etwa 50-500µm aufweist und/oder
• die wellenartige Struktur Erhebungen mit einer Höhe (h) im Bereich von etwa 5-100µm aufweist,
wobei sich die Teil-Bereiche (10₁, 10₂...) hinsichtlich ihrer Wellenlänge (λ) und hinsichtlich der Höhe (h) der Erhebungen unterscheiden.

8. Verfahren zum Erstellen eines optischen Elements zur Beeinflussung der Lichtabgabe von Leuchtmitteln,
wobei das optische Element (1) aus einem lichtdurchlässigen Material besteht und zumindest einen Oberflächenbereich (7) aufweist, der als lichtbrechende Lichtaustrittsfläche des optischen Elements (1) dient,
wobei der Oberflächenbereich (7) durch Umschmelzen mit Hilfe eines Lasers mit einer Struktur (10) versehen wird,
wobei die Struktur (10) in mindestens zwei Teil-Bereiche (10₁, 10₂...) unterteilt ist, deren jeweilige Strukturen eine unterschiedliche Geometrie aufweisen, und wobei diese Strukturen an gemeinsamen Grenzen der Teil-Bereiche (10₁, 10₂...) stetig ineinander übergehen,
und wobei die Struktur (10) der beiden Teil-Bereiche (10₁, 10₂...) jeweils zumindest entlang einer ersten Richtung eine stetige, insbesondere eine stetige und differenzierbare wellenartige Form aufweist, wobei
• die wellenartige Struktur eine Wellenlänge (λ) im Bereich von etwa 50-500µm aufweist und/oder
• die wellenartige Struktur Erhebungen mit einer Höhe (h) im Bereich von etwa 5-100µm aufweist,
wobei sich die Teil-Bereiche (10₁, 10₂...) hinsichtlich ihrer Wellenlänge (λ) und hinsichtlich der Höhe (h) der Erhebungen unterscheiden.

9. Verfahren zum Erstellen eines optischen Elements zur Beeinflussung der Lichtabgabe von Leuchtmitteln,
wobei das optische Element (1) aus einem lichtdurchlässigen Material besteht und zumindest einen Oberflächenbereich (7) aufweist, der als lichtbrechende Lichtaustrittsfläche des optischen Elements (1) dient,
wobei das optische Element durch Spritzgießen erstellt wird und die dem Oberflächenbereich (7) entsprechende Oberfläche des Spritzgießwerkzeugs mit einer Struktur versehen ist, welche durch Umschmelzen mit Hilfe eines Lasers erstellt wurde,
wobei die Struktur (10) in mindestens zwei Teil-Bereiche (10₁, 10₂...) unterteilt ist, deren jeweilige Strukturen eine unterschiedliche Geometrie aufweisen, und wobei diese Strukturen an gemeinsamen Grenzen der Teil-Bereiche (10₁, 10₂...) stetig ineinander übergehen,
und wobei die Struktur (10) der beiden Teil-Bereiche (10₁, 10₂...) jeweils zumindest entlang einer ersten Richtung eine stetige, insbesondere eine stetige und differenzierbare wellenartige Form aufweist, wobei
• die wellenartige Struktur eine Wellenlänge (λ) im Bereich von etwa 50-500µm aufweist und/oder
• die wellenartige Struktur Erhebungen mit einer Höhe (h) im Bereich von etwa 5-100µm aufweist,
wobei sich die Teil-Bereiche (10₁, 10₂...) hinsichtlich ihrer Wellenlänge (λ) und hinsichtlich der Höhe (h) der Erhebungen unterscheiden.

## Claims

1. Optical element (1) for influencing the light emission of lamps, in particular for influencing the light emission of one or more LEDs (200), wherein the optical element (1) consists of a translucent material and has at least one surface region (7) which serves as a light-refracting light-exit surface of the optical element (1),
wherein the surface region (7) has a structure (10) which was produced by remelting the optical element (1) or a tool used to manufacture the optical element (1) with corresponding shaping, preferably an injection molding tool, by means of a laser,
wherein the structure (10) is divided into at least two sub-regions (10₁, 10₂...), the respective structures of which have a different geometry, wherein these structures continuously merge into one other at common boundaries of the sub-regions (10₁, 10₂...),
and wherein the structures of the at least the two sub-regions (10₁, 10₂...) each has a continuous, in particular a continuous and differentiable, wave-like shape at least in a first direction, wherein
• the wave-like structure has a wavelength (λ) in the range of approximately 50-500 µm and/or
• the wave-like structure has elevated regions with a height (h) in the range of approximately 5-100 µm,
wherein the sub-regions (10₁, 10₂...) differ in terms of their wavelength (λ) and in terms of the height (h) of the elevated regions.

2. Optical element according to claim 1,
**characterized in that**
the structures continuously and differentiably merge into one another at common boundaries of the sub-regions (10₁, 10₂...).

3. Optical element according to any of the preceding claims,
**characterized in that**
the structure (10) is formed by two superimposed continuous, in particular continuous and differentiable, wave-like structures, which are preferably formed substantially perpendicular to one another.

4. Optical element according to any of the preceding claims,
**characterized in that**
it is formed by a transparent material, preferably plastics material, glass or silicone.

5. Optical element according to any of the preceding claims,
**characterized in that**
it is a lens.

6. Arrangement for light emission comprising lamps (200) and an optical element (1) for influencing the light emission,
wherein the optical element (1) is designed according to any of the preceding claims.

7. Injection molding tool for producing an optical element (1) for influencing the light emission of lamps,
wherein the tool has a surface region which is provided to form a light-refracting light-exit surface of the optical element (1),
wherein the surface region of the tool is provided with a structure (10) which was produced by remelting the tool by means of a laser, wherein the structure (10) is divided into at least two sub-regions (10₁, 10₂...), the respective structures of which have a different geometry, wherein these structures continuously merge into one other at common boundaries of the sub-regions (10₁, 10₂...),
and wherein the structure (10) of the two sub-regions (10₁, 10₂...) each has a continuous, in particular a continuous and differentiable, wave-like shape at least in a first direction, wherein
• the wave-like structure has a wavelength (λ) in the range of approximately 50-500 µm and/or
• the wave-like structure has elevated regions with a height (h) in the range of approximately 5-100 µm,
wherein the sub-regions (10₁, 10₂...) differ in terms of their wavelength (λ) and in terms of the height (h) of the elevated regions.

8. Method for producing an optical element for influencing the light emission of lamps,
wherein the optical element (1) consists of a translucent material and has at least one surface region (7) which serves as a light-refracting light-exit surface of the optical element (1),
wherein the surface region (7) is provided with a structure (10) by remelting by means of a laser,
wherein the structure (10) is divided into at least two sub-regions (10₁, 10₂...), the respective structures of which have a different geometry, and wherein these structures continuously merge into one another at common boundaries of the sub-regions (10₁, 10₂...),
and wherein the structure (10) of the two sub-regions (10₁, 10₂...) each has a continuous, in particular a continuous and differentiable, wave-like shape at least in a first direction, wherein
• the wave-like structure has a wavelength (λ) in the range of approximately 50-500 µm and/or
• the wave-like structure has elevated regions with a height (h) in the range of approximately 5-100 µm,
wherein the sub-regions (10₁, 10₂...) differ in terms of their wavelength (λ) and in terms of the height (h) of the elevated regions.

9. Method for producing an optical element for influencing the light emission of lamps,
wherein the optical element (1) consists of a translucent material and has at least one surface region (7) which serves as a light-refracting light-exit surface of the optical element (1),
wherein the optical element is produced by injection molding and the surface of the injection molding tool corresponding to the surface region (7) is provided with a structure which was produced by remelting by means of a laser,
wherein the structure (10) is divided into at least two sub-regions (10₁, 10₂...), the respective structures of which have a different geometry, and wherein these structures continuously merge into one another at common boundaries of the sub-regions (10₁, 10₂...),
and wherein the structure (10) of the two sub-regions (10₁, 10₂...) each has a continuous, in particular a continuous and differentiable, wave-like shape at least in a first direction, wherein
• the wave-like structure has a wavelength (λ) in the range of approximately 50-500 µm and/or
• the wave-like structure has elevated regions with a height (h) in the range of approximately 5-100 µm,
wherein the sub-regions (10₁, 10₂...) differ in terms of their wavelength (λ) and in terms of the height (h) of the elevated regions.

## Revendications

1. Élément optique (1) permettant d'influencer l'émission de lumière de moyens lumineux, en particulier permettant d'influencer l'émission de lumière d'une ou de plusieurs DEL (200), dans lequel l'élément optique (1) est constitué d'un matériau translucide et présente au moins une zone de surface (7) qui sert de surface de sortie de lumière réfringente de l'élément optique (1),
dans lequel la zone de surface (7) présente une structure (10) qui a été fabriquée à l'aide d'un laser par refusion de l'élément optique (1) ou d'un outil avec un façonnage correspondant utilisé pour la fabrication de l'élément optique (1), de préférence un outil de moulage par injection,
dans lequel la structure (10) est divisée en au moins deux zones partielles (10₁, 10₂...) dont les structures respectives présentent des géométries différentes, dans lequel lesdites structures se confondent l'une dans l'autre de manière continue au niveau de limites communes des zones partielles (10₁, 10₂...), et dans lequel les structures des au moins deux zones partielles (10₁, 10₂...) présentent respectivement, au moins le long d'une première direction, une forme ondulée continue, en particulier continue et différentiable, dans lequel
• la structure ondulée présente une longueur d'onde (λ) dans la plage allant d'environ 50 à 500 µm et/ou
• la structure ondulée présente des protubérances d'une hauteur (h) dans la plage allant d'environ 5 à 100 µm,
dans lequel les zones partielles (10₁, 10₂...) se différencient en ce qui concerne leur longueur d'onde (λ) et en ce qui concerne la hauteur (h) des élévations.

2. Élément optique selon la revendication 1,
**caractérisé en ce**
**que** les structures se confondent l'une dans l'autre de manière continue et différenciable au niveau des limites communes des zones partielles (10₁, 10₂...).

3. Élément optique selon l'une des revendications précédentes,
**caractérisé en ce**
**que** la structure (10) est formée par deux structures ondulées continues superposées, en particulier continues et différentiables, qui sont réalisées de préférence sensiblement perpendiculairement l'une à l'autre.

4. Élément optique selon l'une des revendications précédentes,
**caractérisé en ce**
**que** celui-ci est formé d'un matériau transparent, de préférence en matière plastique, en verre ou en silicone.

5. Élément optique selon l'une des revendications précédentes,
**caractérisé en ce**
**qu'**il s'agit d'une lentille.

6. Agencement pour l'émission de lumière comportant des moyens lumineux (200) ainsi qu'un élément optique (1) permettant d'influencer l'émission de lumière,
dans lequel l'élément optique (1) est réalisé selon l'une des revendications précédentes.

7. Outil de moulage par injection pour la fabrication d'un élément optique (1) permettant d'influencer l'émission de lumière de moyens lumineux,
dans lequel l'outil présente une zone de surface qui est prévue pour former une surface de sortie de lumière réfringente de l'élément optique (1),
dans lequel la zone de surface de l'outil est pourvue d'une structure (10) qui a été fabriquée à l'aide d'un laser par refusion de l'outil, dans lequel la structure (10) est divisée en au moins deux zones partielles (10₁, 10₂...) dont les structures respectives présentent des géométries différentes, dans lequel lesdites structures se confondent l'une dans l'autre de manière continue au niveau de limites communes des zones partielles (10₁, 10₂...),
et dans lequel les structures (10) des deux zones partielles (10₁, 10₂...) présentent respectivement, au moins le long d'une première direction, une forme ondulée continue, en particulier continue et différentiable, dans lequel
• la structure ondulée présente une longueur d'onde (λ) dans la plage allant d'environ 50 à 500 µm et/ou
• la structure ondulée présente des protubérances d'une hauteur (h) dans la plage allant d'environ 5 à 100 µm,
dans lequel les zones partielles (10₁, 10₂...) se différencient en ce qui concerne leur longueur d'onde (λ) et en ce qui concerne la hauteur (h) des élévations.

8. Procédé pour la fabrication d'un élément optique permettant d'influencer l'émission de lumière de moyens lumineux,
dans lequel l'élément optique (1) est constitué d'un matériau translucide et présente au moins une zone de surface (7) qui sert de surface de sortie de lumière réfringente de l'élément optique (1),
dans lequel la zone de surface (7) est pourvue d'une structure (10) par refusion à l'aide d'un laser,
dans lequel la structure (10) est divisée en au moins deux zones partielles (10₁, 10₂...) dont les structures respectives présentent des géométries différentes, et dans lequel lesdites structures se confondent l'une dans l'autre de manière continue au niveau de limites communes des zones partielles (10₁, 10₂...),
et dans lequel les structures (10) des deux zones partielles (10₁, 10₂...) présentent respectivement, au moins le long d'une première direction, une forme ondulée continue, en particulier continue et différentiable, dans lequel
• la structure ondulée présente une longueur d'onde (λ) dans la plage allant d'environ 50 à 500 µm et/ou
• la structure ondulée présente des protubérances d'une hauteur (h) dans la plage allant d'environ 5 à 100 µm,
dans lequel les zones partielles (10₁, 10₂...) se différencient en ce qui concerne leur longueur d'onde (λ) et en ce qui concerne la hauteur (h) des élévations.

9. Procédé pour la fabrication d'un élément optique permettant d'influencer l'émission de lumière de moyens lumineux,
dans lequel l'élément optique (1) est constitué d'un matériau translucide et présente au moins une zone de surface (7) qui sert de surface de sortie de lumière réfringente de l'élément optique (1),
dans lequel l'élément optique est fabriqué par moulage par injection et la surface de l'outil de moulage par injection correspondant à la zone de surface (7) est pourvue d'une structure qui a été fabriquée par refusion à l'aide d'un laser,
dans lequel la structure (10) est divisée en au moins deux zones partielles (10₁, 10₂...) dont les structures respectives présentent des géométries différentes, et dans lequel lesdites structures se confondent l'une dans l'autre de manière continue au niveau de limites communes des zones partielles (10₁, 10₂...),
et dans lequel les structures (10) des deux zones partielles (10₁, 10₂...) présentent respectivement, au moins le long d'une première direction, une forme ondulée continue, en particulier continue et différentiable, dans lequel
• la structure ondulée présente une longueur d'onde (λ) dans la plage allant d'environ 50 à 500 µm et/ou
• la structure ondulée présente des protubérances d'une hauteur (h) dans la plage allant d'environ 5 à 100 µm,
dans lequel les zones partielles (10₁, 10₂...) se différencient en ce qui concerne leur longueur d'onde (λ) et en ce qui concerne la hauteur (h) des élévations.
